# EUROPEAN PATENT SPECIFICATION

(11) **EP 1 997 618 B1**
(45) Date of publication and mention of the grant of the patent: **23.04.2014**
(21) Application number: 08009776.9
(22) Date of filing: 29.05.2008
(51) Int. Cl.: B32B 27/30, B65B 31/04, B65D 1/34

(54) **Method for producing a tray for food products**
Verfahren zur Herstellung einer Schale für Lebensmittel
Méthode de fabrication d'une barquette pour aliments

(30) Priority: 01.06.2007 IT BO20070391
(43) Date of publication of application: 03.12.2008
(73) Proprietor: COOPBOX Eastern S.r.o., Nové Mesto nad Váhom (SK)
(72) Inventor: Cornini, Veronica, 42100 Reggio Emilia (IT); Fiordelisi, Fabio, 42100 Reggio Emilia (IT); Fornaciari, Claudio, 42100 Reggio Emilia (IT); Lanzani, Federico, 42100 Reggio Emilia (IT); Movilli, Walter, 42100 Reggio Emilia (IT); Vannini, Cesare, 42100 Reggio Emilia (IT)
(74) Representative: Sabbiuni, Renzo

(56) References cited:
- EP-A1- 1 193 179
- US-A- 5 265 756
- US-A- 5 670 552
- US-A- 5 779 050

## Description

### Field of application

The present invention generally refers to the field of plastic materials for the food packaging industry.

In detail, the invention regards a method for producing a tray for packaging food products.

### Prior Art

It is known that the food packaging sector is particularly careful to the consumer needs and, therefore, several new packages are constantly released into the market.

Packages comprising a tray or bowl of foamed polystyrene are widely available for solid food products such as meat, fish, cheese, fruits and vegetables as well as oven, food shops and confectionary products.

In particular, trays essentially made of a single layer of foamed polystyrene are used. Such trays serve as simple containers for holding the packaged food product, or used are trays having opened cells structures which allow, among others, also the absorption of the liquids released by the food, especially meat and fish.

In this type of packages, closure is generally obtained by winding an extensible plastic film around a tray holding the food product.

In such case, the shelf-life of the food package thus packaged, lasts only a few days, generally from two to four days.

Furthermore, known are packages sealed in a modified or protective atmosphere (see e.g. US 5779050); such packages extend the periods of preservation of the food product held therein.

Such type of package essentially comprises a tray made of a foamed polystyrene layer generally coated in the inner part by a first plastic film having barrier properties against gases or vapours, which is in turn sealed along a peripheral strip to a second plastic film having barrier properties, in such a manner to entrap a preset gas or gas mixture within the package between the two plastic films.

A distinctive characteristic of the trays with barrier properties consists in having slightly inclined (almost vertical) side walls, in order to increase their capacity and that is their internal volume.

Such solution is necessary given that the content of the package, that is the food product arranged in the tray, cannot project beyond the peripheral upper edge of the tray itself sealed on which is the closure plastic film, as it usually occurs on the contrary in the packages comprising closed trays by wrapping using an extensible film.

In any case, such trays, in all the cases considered beforehand are quite standardised comprising a foamed portion with a very low density, generally comprised in the range between 30 and 50 grams/litre and in any case not exceeding 60 grams/litre, and thicknesses of the walls comprised between 3.5 and 6 millimetres which are capable of ensuring a god rigidity of the tray using small amounts of plastic material.

As known, such trays are obtained by means of thermoforming a sheet made of a foamed polystyrene layer coupled with a plastic film having barrier properties, in which the polystyrene layer (foamed portion) has a density comprised between 40 and 80 grams/litre.

In cases where trays of foamed plastic material are not used, the known technique also provides for packages of the type in modified or protective atmosphere, comprising trays essentially made of polypropylene, polyethylene terephthalate, high impact polystyrene or other non-foamed resins which allow making transparent, opaque and coloured products.

Though advantageous and meeting the objective, trays of the type considered above are not free of drawbacks which in the specific case should be linked to the characteristics which determine its advantages.

In particular, the packages comprising trays of foamed polystyrene guarantee a certain degree of thermal insulation, useful when transporting the package, for example, from the point of purchase to home.

Furthermore, such trays are made with a limited amount of plastic material which is less, given the same capacity of the tray (content), than the one used for trays made of non-foamed plastic material, which - alongside a lower unit cost - also entails a lower environmental impact and a lower exploitation of resources in general.

On the contrary, right due to the fact that they are made of foamed plastic material, such trays are particularly bulky thus leading to a negative impact on storage and transport.

Furthermore, in case of trays intended for packaging in a protective or modified atmosphere, the overall dimensions required, for storing, stacking and transporting the trays, is even greater due to the lower inclination of the walls as described previously.

Furthermore, given that the packages in a protective or modified atmosphere are generally packaged, that is completed, in the factories instead of being completed at the large-scale sales points where the package can be purchased, often desired of the trays used is an easy unstacking on automatic systems which, on the contrary, the trays made of foamed plastic material provided by the known art are not capable of ensuring.

As a matter of fact, the walls of such type of tray are quite thick and slightly inclined (almost vertical) walls and, therefore, it is arranged in a disorderly manner in vertical rows or stacks, making the automatic unstacking in the packaging process quite complicated.

On the other hand, with regard to the packages in modified or protective atmosphere comprising trays made of non-foamed plastic material, it should be noted that the latter are less bulky with respect to the former and they therefore have a smaller overall dimension, with the ensuing advantage in terms of storage and transport.

Furthermore, such trays are also generally quite orderly when arranged in vertical stacks and thus they do not entail particular unstacking difficulties in food package industrial production lines.

Nevertheless, trays of this type are subject to the drawback implying that in order to obtain the rigidity merely sufficient to allow its use, and in any case undoubtedly lower than the one of the trays made of foamed plastic material, an amount of plastic ranging between 30% and 100% higher is used, with the consequent increase of costs, greater environmental impact and generally a higher exploitation of resources.

Furthermore, trays of this type do not guarantee not even the slightest thermal insulation of the product held therein, an insulation which - as observed beforehand - is often required by the consumer.

Therefore, it would be desirable to have a tray having the positive characteristics of the known trays made of foamed plastic material and the positive characteristics of the known trays made of non-foamed plastic material, which is simultaneously capable of overcoming the abovementioned drawbacks or disadvantages.

US-A-5670552 discloses a method for producing a tray for packaging food products comprising the steps of supplying a polystyrene-based mixture into an extruder, melting said mixture, adding a foaming agent to said molten mixture, extruding said mixture by means of a die having a circular crown-shape exit opening, obtaining a tubular-shaped foamed extruded polystyrene sheet, fitting and cooling said tubular sheet exiting from the extruder on a cylindrical spindle, wherein the ratio between the diameter of said spindle and the average diameter of said circular crown is comprise between 2.0 and 10.0, cutting said tubular sheet according to at least one generatrix thus obtaining at least one respective flat foamed extruded polystyrene sheet, coupling on said flat foamed extruded polystyrene sheet a flexible plastic film having barrier properties against gases, and thermoforming said sheet of plastic material thus obtaining a tray. Neither the density of the flat foamed extruded polystyrene sheet nor the density of the tray is mentioned in US-A-5670552.

EP-A-1193179 discloses a foamed polystyrene sheet coextruded together with two surface layers comprising at least one gas barrier layer, which is set into a mouls and formed into a food tray. The foamed polystyrene sheet has a density of 173 g/l.

US-A-5265756 discloses a packaging tray formed of expanded polystyrene foam sheet material, the tray walls having a density comprised between 24 and 136 g/l and a thickness comprised between 2.3 and 12.7 mm.

### Summary of the invention

The objective of the present invention is that of providing an improved method for producing a tray for a food product, in particular for a package in a modified or protective atmosphere, provided with a good structural rigidity and dimensional stability, additionally capable of allowing an accurate forming even when it comes to small details.

This objective according to the invention is met by a method according to claim 1.

Further characteristics and advantages of this invention shall be clearer from the description of some embodiments of a sheet of plastic material, a tray for a food product obtained from such sheet and a package in a protective or modified atmosphere for a food product comprising a such tray, provided hereinafter with reference to the attached drawings provided for illustrative and non-limiting purposes.

### Brief description of the drawings

In such drawings:

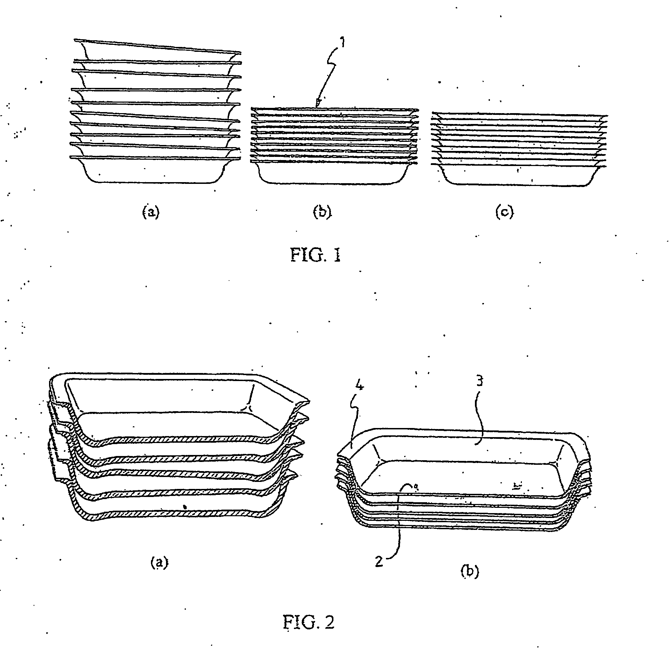

- Figure 1 shows, represented in a schematic manner, three vertical rows made of a same number of trays stacked respectively corresponding to: a) trays of the known type, made of foamed plastic material, having barrier properties against gases; b) trays according to the present invention, made of foamed plastic matrial, having barrier properties against gases; c) trays of the known type, made of non-foamed plastic material, having barrier properties against gases.
- Figure 2 shows an enlarged cross-sectional view, respectively, of: a) a part of the tray of figure 1-a); and b) a part of the tray of figure 1-b).

### Detailed description

Referring to the abovementioned figures, 1 indicates a tray for a food product according to the present invention.

In particular, the tray 1 is illustrated in figure 1-b) stacked in a vertical row and compared with stacks of trays of the known type; while shown in figure 2 is a portion of some of the abovementioned stacks in which the trays are illustrated according to a cross-sectional view.

The tray 1 is of the bowl type and it essentially comprises a bottom 2 and side walls indicated with 3 having a raised peripheral edge 4.

The tray 1 is essentially made of a foamed extruded polystyrene layer and of a plastic film of the known type having barrier properties against gases or vapours, such film being coupled with said foamed extruded polystyrene layer at the internal surface of the tray, not shown in the figures.

A such plastic film is for example made of a multilayer plastic film in which at least one of the layers is made of EVOH (ethyl vinyl alcohol) or PVDC (polyvinylidene chloride), or other polymers or polymer mixtures with low permeability to gases or vapours with a thickness comprised between 2 and 12 microns, in such a manner to be impermeable to gases.

Therefore, the tray 1 is particularly indicated to packaging a food product in a protective or modified atmosphere, as better observed hereinafter in the description.

According to the invention, the tray 1 is obtained by means of thermoforming a sheet comprising a foamed extruded polystyrene layer, on whose side or surface thereof the abovementioned plastic film impermeable to gas is coupled, whose foamed extruded polystyrene layer has a density comprised between 150 and 350 grams/litre, preferably comprised between 180 and 220 grams/litre, or even better about 200 grams/litre and a thickness equal or smaller than 2.2 millimetres.

Thermoforming a sheet of plastic material, just like coupling a flexible plastic film on a plastic layer of foamed plastic material, are performed according to conventional techniques well known to the known art and, thus, not described here in detail unless the details are useful to a man skilled in the art to understand the invention.

With regard to the abovementioned sheet of plastic material, the sheet is obtained according to the invention as follows.

Firstly, prepared is a polystyrene-based mixture, which is supplied into an extruder which can be of various types, that is, one single-screw, one double-screw, tandem single-screw or tandem primary double-screw extruders.

The polystyrene-based mixture is plasticized and homogenised inside the extruder by means of heating, then, when the mixture is well plasticized, a foaming agent of the known type such as for example butane is introduced into the extruder, then the mixture is cooled and extruded.

In particular, according to the invention, a foamed polystyrene sheet is extruded with a density comprised between 150 and 350 grams/litre, preferably between 180 and 220 grams/litre, even more preferably about 200 grams/litre, and a thickness equivalent or smaller than 2.2 mm.

The extrusion occurs through a die preferably having a circular crown-shaped exit opening, thence obtaining the abovementioned sheet in form of a tubular piece which is fitted or slid eXternally with respect to a cylindrical spindle which has the,purpose to gauge , that is, give the final dimension to the extruded tubular piece.

According to a further characteristic of the invention, the ratio between the diameter of the adjustment spindle and the diameter of the circular crown-shaped die is comprised between 1.5 and 2.2 and preferably is about 2.

It should be observed that the value of the abovementioned ratio is substantially lower (about half) than the one generally used for the production of foamed polystyrene sheets according to the known art, and it allows to obtain a foamed extruded polystyrene sheet having a structure with perfectly integral cells, slightly oriented along a transverse direction.

The spindle is cooled in such a manner to consolidate the foamed polystyrene tubular sheet, which is then cut according to one or more generatrixes to form a flat foamed extruded polystyrene sheet coupled on which is the abovementioned plastic film having barrier properties.

Thus obtained is the abovementioned sheet of plastic material comprising the foamed extruded polystyrene layer coupled with the plastic film having barrier properties, which is then wound in coils which are subsequently forwarded to the thermoforming to obtain the trays which are finally used to make the sealed packages in a protective or modified atmosphere according to the present invention.

In particular, the coupled sheet is thermoformed in a conventional manner, thus obtaining trays generally having side walls with a thickness equivalent to or smaller than 2.5 mm and a foamed portion density (polystyrene layer) comprised between 80 and 200 grams/litre, preferably between 90 and 110 grams/litre, mainly depending on the density of the foamed portion of the abovementioned sheet of plastic material, and depending on the thermoforming operation parameters.

The trays are then separated by means of die cutting or other known cutting systems.

Obtained in this manner are single trays 1, having a given thermal insulation capacity, ready for storage and then forwarded to the site where the food packages are made in a modified or protective atmosphere.

In such sites, the abovementioned package is completed according to the known operations. Such operations essentially comprise arranging a food product in the tray 1, followed by thermowelding on the peripheral edge 4 of the tray 1 a further plastic film having barrier properties (closure plastic film).

In detail, such further plastic film having barrier properties is thermowelded, along a peripheral strip, to the first plastic film having barrier properties which was coupled to the foamed extruded polystyrene layer, at the peripheral edge 4 of the tray, in such a manner that a preset modified or protective atmosphere is entrapped between the two plastic films having barrier properties.

The modified or protective atmosphere is made of a preset gas preferably selected from the group comprising nitrogen, argon, oxygen, helium, carbon dioxide and their mixtures.

The modified or protective atmosphere according to the invention is entrapped in the package according to the invention in a known manner, for example by extracting at least partially, before thermowelding the two plastic films, the air comprised between them followed by introducing, still in the space comprised between the abovementioned films, the preset gas or gas mixture.

In this case, the method or process is referred to as vacuum/gas, in which the modified atmosphere is provided through vacuum by means of conventional type of apparatus.

Alternatively, the air is replaced solely through ejection by means of insufflating the preset gas or gas mixture, according to the so-called "gas washing" method.

In the latter case, the preset gas or gas mixture is insufflated between the first and the second plastic film arranged one over the other.

The insuflated gas ejects the air present between the two plastic films, in turn occupying the space comprised between them and remaining subsequently entrapped in the sealed package when the plastic films are welded to each other.

The invention shall now be illustrated in further detail through a non-limiting example, described in which is the embodiment of a sheet of plastic material and the embodiment of a tray obtained from such sheet according to the invention.

### Example

- A mixture consists of a crystal polystyrene resin in granules of the Styron^{™} 686E type sold by Dow Plastics, charged with nucleating additives (talc) at a percentage equivalent 0.6% with respect to the total weight of the resin, was supplied into a tandem extruder comprising a first 60 mm diameter cylinder and a second 90 mm diameter cylinder, having a capacity of 100 kg/h.

The mixture was plasticized in a portion of the extruder kept at 190-210°C, then butane was added to the plasticized polymer -as a foaming gas - at a quantity equivalent to 2% of the total of the resin.

The polymer charged with the foaming gas was then cooled in the secondary cylinder up to a temperature of about 125° C and extruded through a die having a circular crown-shaped exit opening with an average diameter of 110 mm, obtaining a tubular shaped foamed extruded polystyrene sheet.

The tubular shaped foamed extruded polystyrene sheet was fitted and cooled on a cylindrical adjustment spindle kept at about 10° C having a diameter of 215 mm, thus equivalent to 1.95 times greater than the average diameter of the circular crown-shaped die and subsequently, after being cut longitudinally, it was coupled, through hot rolling, with a plastic film having barrier properties against gases containing EVOH and having a thickness of 60 microns.

Thus obtained, according to the present invention, is a sheet of plastic material comprising a foamed extruded polystyrene layer coupled with a flexible plastic film having barrier properties against gases, in which the foamed portion of the sheet of plastic material, that is, the foamed extruded polystyrene layer has a density equivalent to 200 grams/litre and a thickness equivalent to 1.3 mm.

The sheet of plastic material thus obtained was introduced into a thermoforming machine provided with a preheating furnace kept at about 160° C and, thence, shaped in a mould, kept at a temperature of 20° C, for 3.5 seconds obtaining trays according to the invention having a density of the foamed portion (polystyrene layer) equivalent to 110 grams/litre, an average thickness of the walls of about 2 mm and a depth of 50 mm.

Furthermore, the abovementioned trays were obtained in regular shapes and with writings on the bottom, representing among others the trademarks, perfectly imprinted and of good quality.

The trays thus obtained, arranged in rows, had a good overall dimension equivalent to about a half of the one of foamed polystyrene trays of the same dimensions made according to the known art.

Furthermore, the mechanical resistance of the abovementioned trays was ascertained and such trays resulted widely sufficient to bear both the packaging operations and the subsequent handling to which such trays are generally subjected.

Unstacking tests were also performed on automatic unstacking machines which showed a fairly flawless operation.

A first advantage achieved by the present invention consists in having trays essentially made of foamed plastic material adapted for packaging a food product in a modified or protective atmosphere, which when stacked in vertical rows have an overall dimension corresponding to about a half of the trays provided for by the known art, and almost equivalent to the one of trays made of non-foamed plastic material, as illustrated in figure 1.

A second advantage lies in the accuracy and order of the stacking observed in the trays of the invention (figure 1 and 2), which can be compared to the one of the trays made of non-foamed plastic material (figure 1).

Such stacking order and accuracy make the trays according to the invention also particularly suitable for unstacking on automatic systems, contrary to what occurs with traditional trays made of foamed plastic material having barrier properties.

A further advantage lies in that the weight of the trays according to the invention, which in the case of the trays of figure 1, measuring 180 x 250 x 30 mm, is about 13.7 grams each, that is it can be compared, if not equivalent, to the one of trays made of foamed plastic material, while it is lighter than the about 18.7 grams of weight of the trays of the same dimensions made of non-foamed plastic material, provided for by the known art.

As considered beforehand, the weight of a tray should be directly linked to the amount of plastic material used to make it, and thus the cost of the tray itself in terms of production and transport.

As far as rigidity is concerned, the one observed on the trays according to the invention is only slightly lower than the one of the traditional trays made of foamed plastic material, but nonetheless absolutely sufficient for the type of packaging intended for such trays, given that it was proved higher with respect to the rigidity of the known type trays of non-foamed plastic material.

Also the thermal insulation that the trays according to the present invention are capable of guarantee is slightly lower than the one of traditional trays made of foamed plastic material but nevertheless sufficient to provide a good thermal protection to the content.

Furthermore, a tray made of foamed extruded polystyrene according to the present invention allows a well defined forming even when it comes to small details which at times supplement a food product package, such as for example writings and trademarks which are often a guarantee for the consumer.

Still, it should be added that when making a tray according to the present invention, it is advantageously possible to use the same thermoforming moulds used for making the trays made of foamed plastic material, of the known type.

Therefore, the present invention achieves all the advantages described above without requiring new equipment which may have a negative impact in terms of costs.

It is understood that the invention described above in its different embodiments comprising a sheet of plastic material, a tray for a food product obtained from such sheet, a package in a modified or protective environment for a food product , comprising a such tray and the relative manufacture method, shall be subjected, with the aim of meeting specific and required needs, by a man skilled in the art, to various modifications all of which fall within the scope of protection of the invention, as defined by the following claims.

## Claims

1. Method for producing a tray for packaging food products comprising the following steps:
- supplying a polystyrene-based mixture into an extruder;
- melting said mixture;
- adding a foaming agent to said molten mixture;
- extruding said mixture by means of a die having a circular crown-shape exit opening, obtaining a tubular-shaped foamed extruded polystyrene sheet;
- fitting and cooling said tubular sheet exiting from the extruder on a cylindrical spindle, wherein the ratio between the diameter of said spindle and the average diameter of said circular crown is comprise between 1.5 and 2.2;
- cutting said tubular sheet according to at least one generatrix thus obtaining at least one respective flat foamed extruded polystyrene sheet having a density comprised between 180 and 220 grams/litre and a thickness equivalent to or smaller than 2.2 mm.;
- coupling on said flat foamed extruded polystyrene sheet a flexible plastic film having barrier properties against gases obtaining a sheet of plastic material comprising two layers;
- thermoforming said sheet of plastic material with a thermoforming machine provided with a mould thus obtaining a tray with a thickness equivalent or smaller than 2.5 mm and a foamed density comprised between 80-200 grams/litre.

2. Method according to claim 1, wherein said foaming agent is butane.

3. Method according to claim 1 or 2, wherein said ratio between the diameter of said spindle and the average diameter of said circular crown is equivalent to about 2.

4. Method according to any one of claims 1-3, wherein said extruded polystyrene sheet has, in section, a substantially closed cells structure.

## Patentansprüche

1. Verfahren zur Herstellung einer Schale zum Verpacken von Lebensmitteln umfassend die folgenden Schritte;
- Zuführen eines polystyrenbaslerten Gemisches in einen Extruder;
- Schmelzen des Gemisches;
- Hinzufügen eines Schaumbildners zu dem geschmolzenen Gemisch;
- Extrudieren des Gemisches mittels einer Austrittsdüse, die eine umlaufende kranzförmige Austrittsöffnung aufweist, Erhalten einer röhrenförmig ausgeformten, aufgeschäumten, extrudierten Polystyrenbahn;
- Einpassen und Abkühlen der aus dem Extruder austretenden röhrenförmigen Bahn auf einer zylindrischen Spindel, wobei das Verhältnis zwischen dem Durchmesser der Spindel und dem mittleren Durchmesser des umlaufenden Kranzes zwischen 1,5 und 2,2 liegt;
- Schneiden der röhrenförmigen Bahn entlang mindestens einer Mantellinie zum Erhalten mindestens einer jeweils flachen, aufgeschäumten, extrudiertren Polystyrenbahn, die eine Dichte zwischen 180 und 220/Liter und eine Dicke gleich oder kleiner als 2,2 mm aufweist;
- Befestigen einer flexiblen, gegenüber Gasen Barriereeigenschaften aufweisenden Kunststofffolie auf der flachen, aufgeschäumten, extrudierten, Polystyrenbahn zum Erhalten einer Bahn aus Kunststoffmaterial umfassend zwei Lagen;
- Thermoformen der Bahn aus Kunslstoffmaterial mit einer Thermoformmaschine, die mit einem Formwerkzeug versehen ist zum Erhalten einer Schale mit einer Dicke gleich oder kleiner als 2,5 mm und eine aufgeschäumte Dichte zwischen 80 - 200 Gramm/Liter aufweist.

2. Verfahren nach Anspruch 1, wobei der Schaumbildner Butan ist.

3. Verfahren nach Anspruch 1 oder 2, wobei das Verhältnis zwischen dem Durchmesser der Spindel und dem mittleren Durchmesser des umlaufenden Kranzes in etwa gleich 2 ist.

4. Verfahren nach einem der Ansprüche 1 bis 3, wobei die extrudierte Polystyrenbahn im Querschnitt eine im Wesentlichen geschlossene Zellstruktur aufweist.

## Revendications

1. Procédé de fabrication d'un plateau destiné à emballer des produits alimentaires comprenant les étapes suivantes :
- la fourniture d'un mélange à base de polystyrène dans une extrudeuse ;
- la fusion dudit mélangé ;
- l'ajout d'un agent moussant audit mélange fondu ;
- l'extrusion dudit mélange au moyen d'une matrice qui présente une ouverture de sortie circulaire en forme de couronne, en obtenant une feuille de mousse de polystyrène extrudée de forme tubulaire ;
- le placement et le refroidissement de ladite feuille tubulaire qui sort de l'extrudeuse sur un arbre cylindrique, dans lequel le rapport entre le diamètre dudit arbre et le diamètre moyen de ladite couronne circulaire est compris entre 1,5 et 2,2 ;
- la découpe de ladite feuille tubulaire selon au moins une génératrice, en obtenant de ce fait au moins une feuille de mousse de polystyrène extrudée plate respective qui présente une densité comprise entre 180 et 220 grammes / litre et une épaisseur équivalente ou inférieure à 2,2 mm ;
- le couplage sur ladite feuille de mousse de polystyrène extrudée plate d'une feuille en plastique flexible qui présente des propriétés de barrière vis-à-vis des gaz, en obtenant une feuille en plastique qui comprend deux couches ;
- le thermoformage de ladite feuille en plastique avec une machine de thermoformage fournie avec un moule, en obtenant de ce fait un plateau qui présente une épaisseur équivalente ou inférieure à 2,5 mm et une densité de mousse comprise entre 80 et 200 grammes/litre.

2. Procédé selon la revendication 1, dans lequel ledit agent moussant est du butane.

3. Procédé selon la revendication 1 ou 2, dans lequel ledit rapport entre le diamètre dudit arbre et le diamètre moyen de ladite couronne circulaire est équivalente à approximativement 2,

4. Procédé selon l'une quelconque des revendications 1 à 3, dans lequel ladite feuille de polystyrène extrudé présente, en coupe, une structure à alvéoles sensiblement fermés.
